**Europäisches Patentamt**

**European Patent Office**

**Office européen des brevets**

(11) Veröffentlichungsnummer: **0 073 299**
**B1**

# EUROPÄISCHE PATENTSCHRIFT

(45) Veröffentlichungstag der Patentschrift:
**29.01.86**

(21) Anmeldenummer: **82104607.5**

(22) Anmeldetag: **26.05.82**

(51) Int. Cl.⁴: **F 16 L 3/20,** F 16 G 1/12,
F 16 F 1/46, B 60 K 13/04

(54) **Elastomerschlaufe.**

(30) Priorität: **25.08.81 DE 3133545**

(43) Veröffentlichungstag der Anmeldung:
**09.03.83 Patentblatt 83/10**

(45) Bekanntmachung des Hinweises auf die Patenterteilung:
**29.01.86 Patentblatt 86/5**

(84) Benannte Vertragsstaaten:
**AT BE CH DE FR GB IT LI NL SE**

(56) Entgegenhaltungen:
**EP - A - 0 015 298**
**DE - A - 1 505 498**
**DE - A - 2 225 395**
**DE - A - 2 247 488**
**DE - A - 2 658 358**
**DE - A - 2 910 910**
**DE - B - 1 034 419**
**DE - C - 10 604**
**FR - A - 1 036 056**
**US - A - 1 360 456**
**US - A - 1 703 765**
**US - A - 1 850 289**
**US - A - 2 452 752**
**US - A - 3 298 173**
**US - A - 3 775 969**

(73) Patentinhaber: **WOCO Franz-Josef Wolf & Co.,**
**Sprudelallee 19, D-6483 Bad Soden-Salmünster (DE)**

(72) Erfinder: **Wolf, Franz-Josef, Sprudelallee 19, D-6483 Bad**
**Soden-Salmünster (DE)**
Erfinder: **Pletsch, Hubert, Weinbergstrasse 37,**
**D-6943 Birkenau (DE)**
Erfinder: **Benneyan, Gregoire, Huttenheegstrasse 2,**
**D-6483 Bad Soden-Salmünster (DE)**

(74) Vertreter: **Jaeger, Klaus, Dr. et al, JAEGER & PARTNER**
**Patentanwälte Bergstrasse 48 1/2,**
**D-8035 München-Gauting (DE)**

**Beschreibung**

Die Erfindung betrifft eine ringförmige Elastomerschlaufe der im Oberbegriff des Patentanspruchs 1 genannten Art sowie deren Verwendung.

Eine ringförmige Elastomerschlaufe für eine Aufhängung im Sinne der Erfindung ist ein in sich geschlossener Ring, der nicht unbedingt Kreisform zu haben braucht, mit prinzipiell beliebigem Querschnitt, wobei der im wesentlichen aus einem Elastomer bestehende Ring der Aufnahme, Dämpfung und Pufferung von Zugkräften dient, die zwischen zwei relativ zueinander beschränkt beweglichen Konstruktionsteilen oder Maschinenteilen auftreten können.

Elastomerschlaufen dieser Art werden im Bereich des Maschinenbaues zur Aufhängung der verschiedensten Teile verwendet, die Schwingungen oder Stossbelastungen ausgesetzt sind, beispielsweise zur Aufhängung von Tischen, Leitungen oder Führungen. So werden beispielsweise auch die Motorabgasleitungen und Schalldämpfertöpfe von Kraftfahrzeugen, also das sogenannte Auspuffsystem, über solche Elastomerschlaufen an Trägern aufgehängt, die fest mit dem Chassis oder mit der Karosserie des Fahrzeugs verbunden sind.

Wenn solche Elastomerschlaufen ausschliesslich aus einem Elastomer bestehen, weisen sie einen zu flachen Verlauf der Federkennlinie und eine zu geringe Standzeit auf. Insbesondere die zu geringe Progression der Federkennlinie bei grossen Wegen führt dazu, dass bei wirtschaftlich sinnvoller Dimensionierung von Elastomerschlaufen zu Aufhängungszwecken, die ausschliesslich aus einem Elastomer bestehen, bei Lastspitzen, insbesondere bei Stosslastspitzen, das belastete Konstruktionsteil einen relativ weiten Hub gegenüber dem tragenden Konstruktionsteil ausführt und bei Aufheben der Last mit relativ grosser Beschleunigung gegen das tragende Konstruktionsteil zurückgeführt wird. Diese überweiten Federwege unter Grenzbelastung führen zum Stossen und Schlagen der Teile gegeneinander und zu einer erheblichen Verkürzung der Standzeit der Elastomerschlaufe.

Es ist daher bekannt, solche Elastomerschlaufen durch Einlagen zu verstärken. Als Verstärkungsmaterial werden textile Gewebe (DE-C3-15 05 498) oder Federstahl (DE-C3-26 58 358) verwendet. Durch die Gewebeverstärkungen kann jedoch die angestrebte Progression der Federkennlinie nicht, zumindest bei weitem nicht in dem angestrebten Ausmass, herbeigeführt werden. Ausserdem weisen mit Gewebeeinlagen verstärkte Elastomerschlaufen eine ungenügende thermische Stabilität der Federkennlinie auf. Eine solche thermische Stabilität des Verlaufs der Federkennlinie ist jedoch für viele Anwendungszwecke durchaus von Bedeutung, so beispielsweise für die Aufhängung von Motorabgasleitungen im Kraftfahrzeugbau. Bei der Verwendung eines Federstahlbandes als Einlage für die Elastomerschlaufen einer Aufhängung hat die Praxis gezeigt, dass insbesondere bei Schwingungsbelastung die Federbandeinlage häufig bis in den Grenzbereich der Federdehnung belastet wird. Dies führt zu verhältnismässig rascher Materialermüdung und nicht selten zum Bruch des Federstahlbandes.

Andere, aus der Praxis bekannt gewordene Versuche, die Elastomerschlaufe durch unelastische oder nur geringfügig dehnbare Verstärkungseinlagen zu verfestigen, haben ebenfalls nicht zum Erfolg geführt. Die Federkennlinien solcher Elastomerschlaufen zeigen teils bereits im Proportionalitätsbereich, teils im Anschluss an den Proportionalitätsbereich einen so steilen Anstieg, dass das angestrebte Dämpfungsverhalten der Elastomeraufhängung weitgehend verlorengeht.

Ein ringförmiges Zugfederelement der im Oberbegriff des Anspruchs 1 genannten Art ist aus der europäischen Offenlegungsschrift EP-A1-15 298, dort speziell Figur 3d, bekannt. Das Zugfederelement besteht aus einem Elastomerring, in dem eine Rundstahlkette einvulkanisiert ist, deren Durchmesser gleich dem Durchmesser der Seele des Ringes ist, und die über aus dem Elastomer radial herausgeführte Verbindungsglieder direkt lastaufnehmend angreifbar ist. Die Federkennlinie dieser für statische Belastung ausgelegten Zugfeder ist zunächst ausschliesslich durch die Elastizität des Elastomerringes bestimmt, verläuft also extrem weich, um dann, bei flachgezogener Gliederkette praktisch senkrecht anzusteigen. Zwischen dem linearen Anfangsanstieg der Elastomerfederung und dem unelastischen senkrechten Anstieg bei Zugkettenstreckung weist dieses Zugfederelement keinen dynamisch nutzbaren Progressionsbereich auf. Für schwingungsdämpfende Aufhängungen jeder Art ist dieses bekannte Zugfederelement völlig ungeeignet.

Angesichts dieses Standes der Technik liegt der Erfindung die Aufgabe zugrunde, eine ringförmige Elastomerschlaufe für eine Aufhängung zu schaffen, speziell für eine schwingungsdämpfende und schalldämpfende Aufhängung zu schaffen, deren Federkennlinie einen möglichst breiten und flachen Proportionalitätsbereich und unmittelbar an diesen anschliessend einen Progressionsbereich aufweist, der in einen steilen Anstieg der Federkennlinie übergeht.

Zur Lösung dieser Aufgabe schafft die Erfindung eine Elastomerschlaufe der eingangs genannten Art, die erfindungsgemäss durch die im kennzeichnenden Teil des Patentanspruchs 1 genannten Merkmale gekennzeichnet ist.

Die Erfindung schafft also eine ringförmige Elastomerschlaufe, bei der das Elastomer durch eine vollständig eingebettete Gelenkkette verstärkt ist. Wesentlich ist dabei, dass zwischen der Gelenkkette bzw. den einzelnen Gliedern der Gelenkkette und dem Elastomer, aus dem die Ringschnur der Elastomerschlaufe besteht, eine feste, haftende und formschlüssige Verbindung besteht. Die Gelenkkette bzw. der in sich geschlossene Gelenkkettenring und der Elastomerring bilden also einen einheitlichen Verbundkörper. Dabei sind der Gelenkkettenring und der Elastomerring zumindest im wesentlichen konzentrisch zueinander bzw. zumindest im wesentlichen koaxial zueinander, bezogen auf die Normale der Ringebene, angeordnet. In den Auflagebereichen, in denen der Lastangriff am Elastomer des Ringes erfolgt, verläuft die Kette gestreckt.

Bei Verformung des Elastomerringes werden die Winkel zwischen je zwei benachbarten Gliedern der Gelenkkette verändert, so dass die Glieder der Gelenkkette ausserhalb der Auflagebereiche also Knickbewegungen gegeneinander ausführen. Da die Glieder der Gelenkkette jedoch mit dem Elastomer der Schnur der Elastomerschlaufe in einem festen formschlüssigen Verbund stehen, wird durch die Knickbewegung der Glieder der Gelenkkette gegeneinander der Spannungsverlauf der Verformungsspannung im Elastomer konzentriert und so verstärkt, dass der Proportionalitätsbereich der Federkennlinie, also der Kraft-Weg-Kennlinie, der Elastomerschlaufe insgesamt verlängert und nach Durchlaufen eines Progressionsbereiches die Federkennlinie durch einen steilen Anstieg begrenzt werden kann, der letztlich seinerseits durch die Zugfestigkeit des eingelagerten Gelenkkettenringes begrenzt ist.

Aus der deutschen Offenlegungsschrift DE-A1-22 47 488, dort insbesondere Fig. 10, ist ein lineares Zugfederelement mit einem rundstabförmigen Elastomerteil bekannt, in das eine Bolzenkette einvulkanisiert ist, deren Glieder über die gesamte Länge des Elastomerteils im unbelasteten Zustand des Zugfederelements gegeneinander gewinkelt angeordnet sind. Die Kettenenden sind als Lastangriffselemente, speziell als Teile einer Abschleppkette, aus dem Elastomerteil herausgeführt. Dieses bekannte Zugfederelement wird insbesondere zum Schleppen und Festmachen von Booten verwendet, also für primär statische Einsatzbereiche. Wie bei dem aus der Druckschrift EP-A1-15 298 bekannten ringförmigen Zugfederelement erfolgt auch bei dem aus der Deutschen Offenlegungsschrift DE-A1-22 47 488 bekannten linearen Zugfederelement der Lastangriff unmittelbar und direkt an der mit dem Elastomer umgebenen metallischen Verstärkungskette. Zugfederelemente dieser Art weisen so gut wie keine akustische Dämpfung auf und sind daher ungeeignet, den der Erfindung zugrundeliegenden Aufgabenaspekt der Schaffung einer schwingungsdämpfenden und schalldämpfenden Aufhängung zu lösen. Die Elastomerschlaufe gemäss der Erfindung geht also in dieser Hinsicht wesentlich über eine blosse Übertragung der aus dem linearen Zugfederelement bekannten Konstruktionsprinzipien auf das ringförmige Zugfederelement hinaus, da die beiden Zugfederelementen zugrundeliegende Philosophie des Lastangriffs am Verstärkungselement bei der ringförmigen Elastomerschlaufe gemäss der Erfindung zu Gunsten eines Angriffs am Elastomer selbst und zu Gunsten der geforderten Schalldämpfung aufgegeben wird. Andererseits wäre es im Hinblick auf eine akzeptable Standzeit nicht möglich, bei der aus dem linearen Zugfederelement bekannten Anordnung der Kettenglieder einen Lastangriff am Elastomer vorzunehmen. Dies wird bei der Elastomerschlaufe gemäss der Erfindung dadurch erst ermöglicht, dass im Auflagebereich der Elastomerschlaufe, also in dem Bereich der Elastomerschlaufe, in dem der Lastangriff am Elastomer selbst erfolgt, die Bolzenkette nicht gewinkelt, sondern gestreckt verläuft. Dadurch wird in diesem Auflagebereich eine Dehnung des Elastomers praktisch ausgeschlossen, so dass das Elastomer in diesem hochbelasteten Auflagebereich ausschliesslich auf Druck, nämlich auf Kompression zwischen Verstärkungskette und Auflage, beansprucht wird, wobei in diesem Zusammenhang daran erinnert wird, dass ein Elastomer bekanntlich unter Kompression wesentlich höher belastbar ist und eine wesentlich höhere Standzeit aufweist als unter Zugbelastung.

Der wesentliche Vorteil der Elastomerschlaufe gegenüber den aus der deutschen Offenlegungsschrift DE-A1-22 47 488 und aus der europäischen Offenlegungsschrift EP-A1-15 298 bekannten Zugfederelementen liegt darin, dass durch eine Verlegung des Lastangriffs an das Elastomer selbst eine akustische Entkopplung gewährleistet ist, die mit den bekannten Zugfederelementen nicht erreicht werden kann. Zudem weist die Elastomerschlaufe dadurch ein wesentlich günstigeres Schwingungsverhalten im Grenzbelastungsbereich auf, dass bei voller Streckung der Verstärkungskette der Übergang zum formschlüssigen Kettenzug nicht ruckartig und schlagartig erfolgt, was sich bei den bekannten Zugfederelementen als zwischen den Angriffspunkten wirkender Schlag oder Stoss äussert, sondern weich in den nie vollständig sondern nur annähernd formschlüssigen Teil der Kennlinie übergeht, da die Verstärkungskette und der Lastangriff stets, auch bei höchster Grenzbelastung, durch die Elastomerschicht zwischen Lastangriffsauflagefläche und Verstärkungskette gummigefedert bleibt. Dies führt, insbesondere durch diesen elastischen Angriff beider Lastangriffe zu einem wesentlich geschmeidigeren und verbesserten Federverhalten der Elastomerschlaufe gemäss der Erfindung im Übergangsbereich zur formschlüssigen Zugverbindung. Da diese Grenzbereiche jedoch gerade für Bereiche mit dynamischer Belastung gemäss der der Erfindung zugrundeliegenden Aufgabe bedeutsam sind, vermag die Elastomerschlaufe gemäss der Erfindung also durch die Kombination ihrer Merkmale Eigenschaften hinsichtlich des dynamischen Federverhaltens und der akustischen Dämpfung bzw. Entkopplung zwischen den Lastangriffen zur Verfügung zu stellen, die auch nach dem kombinierten Stand der Technik nicht erzielbar sind.

Der wesentliche Vorteil der Elastomerschlaufe gemäss der Erfindung gegenüber vergleichbaren Elastomerschlaufen mit Einlagen aus Geweben oder Federstahlbändern liegt in der praktisch vollkommen ermüdungsfreien langfristigen Dauerbelastbarkeit, insbesondere Schwingungsbelastbarkeit. Versuche haben gezeigt, dass die Elastomerschlaufe mehrere Millionen Dehnungszyklen bis in den Progressionsbereich der Federkennlinie hinein vollkommen unbeschadet übersteht, während unter gleichen Bedingungen Gewebeeinlagen durch Dehnung und Stahlbandeinlagen durch Bruch ihre Wirksamkeit bereits bei weit weniger als 1 Million Dehnungszyklen verloren haben.

Insbesondere bei der Verwendung im Kraftfahrzeugbau und bei der Verwendung der Schlaufe zur schalldämpfenden Leitungsaufhängung weist die Elastomerschlaufe die Form eines O-Ringes mit kreisringförmigem Elastomerschnurprofil auf.

Die in das Elastomer eingebettete Gelenkkette kann prinzipiell aus beliebigem Werkstoff bestehen, solange dieser in der Lage ist, mit dem Elastomer einen festen Verbund zu bilden. Wenn dies die von der Elastomerschlaufe erwartete Zugfestigkeit zulässt, kann die Gelenkkette beispielsweise durchaus auch aus Kunststoff bestehen. Vorzugsweise besteht die Gelenkkette jedoch aus Stahl. Die Verbindung zwischen den Stahlgliedern der Gelenkkette bzw. des Gelenkkettenringes und dem Elastomer kann durch Grundieren oder Beschichten des Gelenkkettenringes mit einem Haftmittel in an sich bekannter Weise verbessert werden.

Der von jeweils zwei benachbarten Kettengliedern eingeschlossene Winkel der durch die gewinkelte Anordnung der Kettenglieder gebildeten Sägezahnringlinie liegt dabei vorzugsweise im Bereich von ungefähr 20° bis 90° und ist im einzelnen sowohl von den Kenndaten des Elastomers, insbesondere der Härte des Elastomers, und von der Länge der einzelnen Kettenglieder abhängig. Der Fachmann kann die für den speziellen Anwendungsfall jeweils optimalen Werte ohne weiteres durch Versuche ermitteln. Als Richtwert kann für diese Versuche gelten, dass bei einer Härte des Elastomers im Bereich von ca. 50–60 Shore A und einer Länge der einzelnen Kettenglieder der Gelenkkette von 4 mm und einem Ringdurchmesser der Elastomerschlaufe in der Grössenordnung von ungefähr 5 cm der von jeweils zwei benachbarten Kettengliedern eingeschlossene Winkel ungefähr im Bereich von 40° bis 50° liegt. Je weicher das Elastomer eingestellt ist, desto kleiner kann der Winkel werden und umgekehrt, je härter das Elastomer eingestellt ist, desto grösser sollte auch der von den einzelnen Kettengliedern der gewinkelt gelegten Gelenkkette eingeschlossene Winkel sein. Andererseits, je länger die einzelnen Kettenglieder sind, desto grösser kann auch der Knickwinkel der Sägezahnlinie gewählt werden.

Die Erfindung ist im folgenden an Hand eines Ausführungsbeispiels in Verbindung mit der Zeichnung näher erläutert. Es zeigen:

Fig. 1 im Radialschnitt und in schematischer Darstellung ein Ausführungsbeispiel der Elastomerschlaufe;

Fig. 2 einen Schnitt nach II–II in Fig. 1; und

Fig. 3 die Federkennlinie der in den Figuren 1 und 2 gezeigten Elastomerschlaufe.

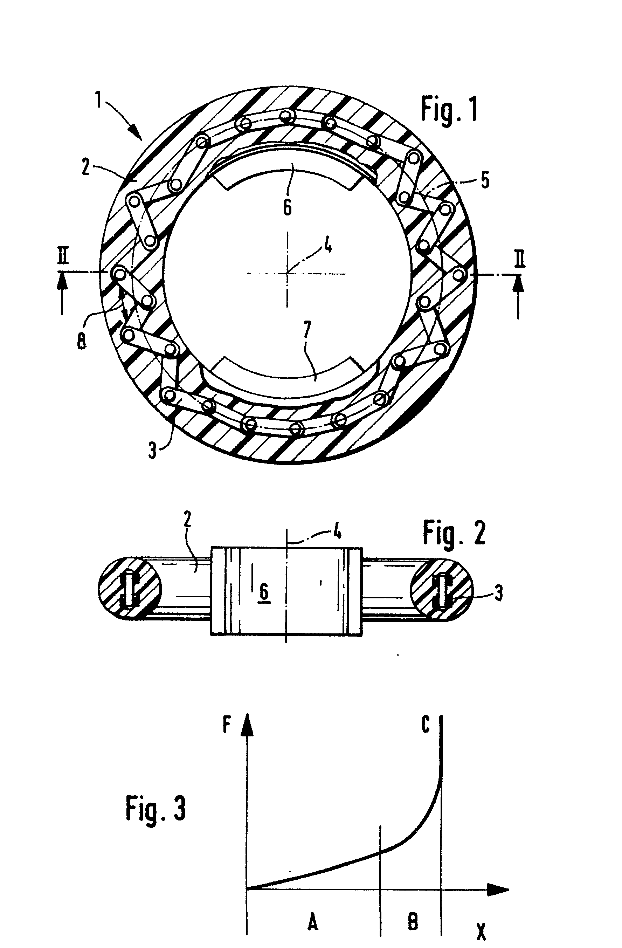

Die in der Fig. 1 im Radialschnitt und in der Fig. 2 im Axialschnitt dargestellte Elastomerschlaufe 1 ist ein Verbundkörper, der aus einer ringförmig in sich geschlossenen Elastomerschnur 2 und einer in dieser eingebetteten und von dem Elastomer der Elastomerschnur 2 vollständig umschlossenen Gelenkkette 3, hier einer Gallkette, besteht, die ebenfalls ringförmig in sich geschlossen ist. Die Gelenkkette 3 ist koaxial zur Mittelachse 4 der Ringebene und koaxial zur Mittelachse 5 der Ringschnur 2 angeordnet. Die gegeneinander zu dämpfenden Konstruktionsteile greifen über Halterungen 6, 7 an der Elastomerschlaufe 1 an.

Der maximale Ringdurchmesser der Mittellinie der Gelenkkette 3, also der Durchmesser der Gelenkkette 3 bei gestreckt ausgelegten Kettengliedern, ist wesentlich grösser als der Ringdurchmesser der Mittelachse 5 der Elastomerringschnur 2 im entspannten Zustand des Elastomers. Durch alternierendes Abwinkeln der einzelnen Kettenglieder der Gelenkkette 3 ist der mittlere Durchmesser der Gelenkkette 3 auf den Durchmesser der Mittelachse 5 der Ringschnur 2 verkleinert. Die Gelenkkette bildet also eine zumindest im wesentlichen regelmässige Sägezahn-Ringlinie. Dabei ist der von jeweils zwei benachbarten Kettengliedern regelmässig eingeschlossene Winkel 8 in der Fig. 1 nicht massstäblich dargestellt, sondern aus Gründen der klareren Darstellung vergrössert gezeigt.

In den Auflagebereichen der Lastangriffe 6, 7 sind die Kettenglieder der in die Elastomerschnur 2 eingebetteten Gelenkkette 3 im Gegensatz zu den übrigen Abschnitten der Elastomerschlaufe 1 nicht gegeneinander zickzackförmig abgewinkelt, sondern gestreckt. Dies vermindert die Dehnbarkeit der Elastomerschlaufe 1 im Bereich der Lastangriffe 6, 7 und trägt dadurch zur Verlängerung der Standzeit der Elastomerschlaufe 1 bei.

Die Federkennlinie für eine Elastomerschlaufe der in den Figuren 1 und 2 gezeigten Art ist in ihrem typischen Verlauf in der Fig. 3 gezeigt. Nach einem relativ breiten Proportionalbereich A folgt ein zügig, aber nicht abrupt ansteigender Progressionsbereich B, der dann in einen steil und praktisch senkrecht ansteigenden Ast C übergeht.

Prüflinge der in den Figuren 1 und 2 gezeigten Elastomerschlaufe wurden auf einem Prüfgerät fast 3 Millionen Dehnungszyklen ausgesetzt, bei denen jede Dehnung bis fast an die obere Grenze des Progressionsbereiches B (Fig. 3) durchgeführt wurde. Keine der nach diesen Dehnungszyklen untersuchten Elastomerschlaufen hat irgendwelche Verschleisserscheinungen oder über die normale Elastomerermüdung hinausgehende Ermüdungserscheinungen gezeigt. Insbesondere blieben Verlauf und Lage der Federkennlinie im Progressionsbereich B und im Anstiegsbereich C unverändert.

**Patentansprüche**

1. Ringförmige Elastomerschlaufe für eine Aufhängung, mit einem zumindest im wesentlichen koaxial zur Mittelachse (4) der Ringebene formschlüssig in dem Elastomer (2) eingebetteten Gelenkkettenring (3), der zumindest im wesentlichen auch koaxial zur Mittelachse (5) der Ringschnur (2) der Elastomerschlaufe (1) angeordnet

4

ist, dadurch gekennzeichnet, dass die Gelenkkette (3) eine Bolzenkette oder eine Buchsenkette ist, die vollständig von dem Elastomer (2) umschlossen ist, dass der Ringdurchmesser des kreisförmig gestreckten Gelenkkettenringes (3) grösser als der Ringdurchmesser des Elastomerschnurringes (2) im entspannten Zustand ist, und dass die Kettenglieder des Gelenkkettenringes (3) im Elastomer (2) eine zumindest im wesentlichen regelmässige Sägezahn-Ringlinie bilden, wobei die Gelenkkette (3) in den Auflagebereichen der Lastangriffe (6, 7) gestreckt verläuft.

2. Elastomerschlaufe nach Anspruch 1, dadurch gekennzeichnet, dass die Schlaufe (1) die Form eines O-Ringes mit kreisförmigem Schnurprofil hat.

3. Elastomerschlaufe nach einem der Ansprüche 1 oder 2, dadurch gekennzeichnet, dass die Gelenkkette (3) eine Bolzenkette oder eine Buchsenkette aus Stahl ist.

4. Elastomerschlaufe nach einem der Ansprüche 1 bis 3, dadurch gekennzeichnet, dass der von jeweils zwei benachbarten Kettengliedern eingeschlossene Winkel (8) 20° bis 90° beträgt.

5. Verwendung der Elastomerschlaufe nach einem der Ansprüche 1 bis 4 zur Aufhängung der Motorabgasleitungen und Schalldämpfertöpfe von Kraftfahrzeugen.

**Revendications**

1. Anneau en élastomère pour suspension, contenant une chaîne annulaire à joints articulés (3) qui est au moins sensiblement coaxiale à l'axe médian (4) du plan de l'anneau et est enrobée avec encastrement dans l'élastomère (2), et qui est également au moins sensiblement coaxiale à l'axe médian (5) du boudin (2) de l'anneau en élastomère (1), caractérisé en ce que la chaîne à joints articulés (3) est une chaîne à boulons ou une chaîne à manchons qui est complètement entourée par l'élastomère (2), en ce que le diamètre de l'anneau constitué par la chaîne à joints articulés (3) déployés en cercle est plus grand que le diamètre de l'anneau constitué par le boudin en élastomère (2) en l'absence de contraintes, et en ce que les éléments de la chaîne à joints articulés (3) contenus dans l'élastomère (2) forment une ligne annulaire en dents de scie au moins sensiblement régulière, la chaîne à joints articulés (3) étant tendue dans les zones (6, 7) d'application des charges.

2. Anneau en élastomère selon la revendication 1, caractérisé en ce que l'anneau (1) a la forme d'un joint torique dont le boudin a une section circulaire.

3. Anneau en élastomère selon l'une des revendications 1 ou 2, caractérisé en ce que la chaîne à joints articulés (3) est une chaîne à boulons ou à manchons en acier.

4. Anneau en élastomère selon l'une des revendications 1 à 3, caractérisé en ce que l'angle (8) formé par deux éléments de chaîne voisins est de 20 à 90°.

5. Utilisation de l'anneau en élastomère selon l'une des revendications 1 à 4 pour la suspension des conduits de gaz d'échappement et des pots d'échappement silencieux des véhicules automobiles.

**Claims**

1. A suspension device comprising a closed annular loop of elastomeric material in which a closed link chain ring (3) is embedded to provide a positive connection to the elastomer (2), said closed link chain ring (3) being arranged at least substantially coaxially with the middle axis (4) of the ring plane and also at least substantially coaxially with the middle axis (5) of the ring body (2) of the closed loop of elastomeric material (1) characterized in that the closed chain link (3) is a bar bushed roller chain or a flat link chain which is completely embedded in the elastomer (2), that the diameter of the ring of the closed link chain (3), when stretched into a circle, is larger than the diameter of the ring of the ring body (2) in its relaxed state and that the links of the closed link chain ring (3) in the elastomer (2) form an at least substantially regular sawtoothed ring the closed link chain ring (3) extending in its stretched state in the areas adjacent the supporting mountings (6, 7).

2. Loop of elastomeric material according to claim 1, characterized in that the loop (1) is formed as an O-ring with annular profile of the ring body (2).

3. Loop of elastomeric material according to one of the claims 1 or 2, characterized in that the closed link chain ring (3) is a steel bar bushed roller chain or flat link steel chain.

4. Loop of elastomeric material according to one of the claims 1 to 3, characterized in that the angle between two adjacent links of the closed link chain ring (3) is 20° to 90°.

5. Use of a loop of elastomeric material according to one of the claims 1 to 4 for suspension of exhaust pipes and mufflers of motor vehicles.

0 073 299

1/1

Fig. 1

Fig. 2

Fig. 3